# EUROPEAN PATENT APPLICATION

(11) **EP 3 477 587 A1**
(43) Date of publication of application: **01.05.2019**
(21) Application number: 17820046.5
(22) Date of filing: 23.06.2017
(51) Int. Cl.: G06T 7/00, G06K 19/07

(54) **IC CARD, PORTABLE ELECTRONIC DEVICE, AND IC CARD CONTROL METHOD**

(30) Priority: 27.06.2016 JP 2016126577
(71) Applicant: Kabushiki Kaisha Toshiba, Minato-ku Tokyo 105-8001 (JP); Toshiba Infrastructure Systems & Solutions Corporation, Kawasaki-shi, Kanagawa 212-0013 (JP)
(72) Inventor: KURIYAMA, Ryouichi, Kanagawa (JP)
(74) Representative: Hoffmann Eitle
(86) International application number: PCT/JP2017/023185
(87) International publication number: WO 2018/003689

(57) **Abstract**

An IC card include a communication unit, a storage unit, a biometric information acquisition unit, a degree of similarity calculation unit, and a response control unit. The communication unit communicates with an external device. The storage unit stores a first biometric information in advance. The biometric information acquisition unit acquires a second biometric information read from a humanbeings' biological body. The degree of similarity calculation unit calculates a degree of similarity between the first biometric information and the second biometric information. The response control unit which transmits information indicating a level of the degree of similarity to the external device by the communication unit.

## Description

### TECHNICAL FIELD

Embodiments of the present invention relate to an IC card, a portable electronic device, and a method of controlling an IC card.

### BACKGROUND

When receiving a command from a processing device (an IC card processing device) that processes an IC card, the IC card (a portable electronic device) executes processing according to the received command. Further, a biometric authentication system for authenticating (verifying) an owner (a user) of an IC card using such the IC card and the IC card processing device has been put to practical use.

An IC card used in a biometric authentication system stores in advance biometric information (registered biometric information) acquired from a humanbeings' body such as a fingerprint, a face, a vein, an iris, and the like. The IC card processing device or the IC card reads biometric information (read biometric information) from the humanbeings' biological body. The IC card calculates a degree of similarity between the read biometric information and the registered biometric information. The IC card determines that the verfication success when a calculated degree of similarity is equal to or greater than a preset threshold value, and determines that the verfication failure when the calculated degree of similarity is less than the preset threshold value.

### [Prior art documents]

### [Patent documents]

[Patent document 1] Japanese patent application publication NO. 2013-120540

### [SUMMARY OF THE INVENTION]

### [Problem to be solved by the invention]

It is assumed that the read biometric information fluctuates depending on conditions (reading conditions) such as performance of the device that performs reading, humidity, and air temperature. However, the threshold value used for comparison with the calculated degree of similarity is determined by the specification of the biometric authentication system and is fixed. For this reason, there is a problem that there is a possibility that a verfication result varies depending on the reading conditions.

An object of the present invention is to provide an IC card, a portable electronic device, and a control method of an IC card capable of realizing stable authentication.

### [Means for solving the problem]

According to one embodiment, an IC card includes a communication unit, a storage unit, a biometric information acquisition unit, a degree of similarity calculation unit, and a response control unit. The communication unit communicates with an external device. The storage unit stores in advance first biometric information. The biometric information acquisition unit acquires second biometric information read from a humanbeings' biological body. The degree of similarity calculation unit calculates a degree of similarity between the first biometric information and the second biometric information. The response control unit transmits information indicating a level of the degree of similarity to the external device by the communication unit.

### [BRIEF DESCRIPTION OF THE DRAWINGS]

FIG. 1 is an explanatory diagram for explaining an example of a biometric authentication system according to one embodiment.
FIG. 2 is an explanatory diagram for explaining an example of a verification command according to one embodiment.
FIG. 3 is an explanatory diagram for explaining an example of an IC card according to one embodiment.
FIG. 4 is an explanatory diagram for explaining a correspondence relationship among a biometric type, biometric information, and a verification algorithm according to one embodiment.
FIG. 5 is an explanatory diagram for explaining a correspondence relationship between a threshold value range and information indicating a level of a degree of similarity according to one embodiment.
FIG. 6 is an explanatory diagram for explaining an example of an operation of the IC card according to one embodiment.
FIG. 7 is an explanatory diagram for explaining a functional unit executed by a CPU of the IC card according to one embodiment.

### EMBODIMENTS TO PRACTICE THE INVENTION

Hereinafter, embodiments of the present invention will be described with reference to the drawings.

### (Regarding biometric authentication system 1)

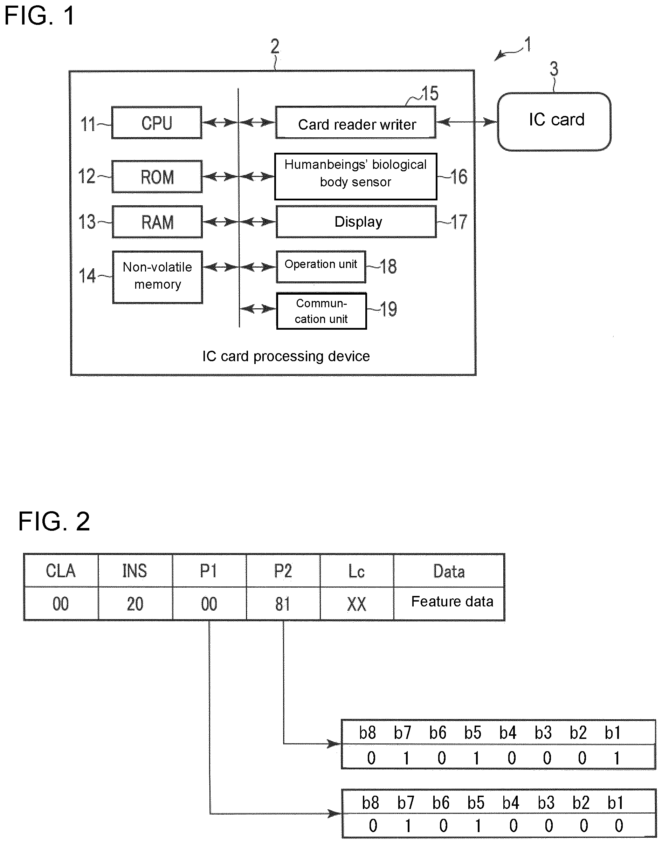

FIG. 1 is an explanatory diagram for explaining an example of the biometric authentication system 1. The biometric authentication system 1 includes an IC card processing device 2 and an IC card 3. The biometric authentication system 1 is a system for authenticating a user of the IC card 3 by using biometric information read from a humanbeings' biological body.

### (Regarding IC card processing device 2)

The IC card processing device 2 communicates with the IC card 3 possessed by the user, and causes the IC card 3 to execute a verification process.

The IC card processing device 2 includes a CPU 11, an ROM 12, an RAM 13, a nonvolatile memory 14, a card reader writer 15, a humanbeings' biological body sensor 16, a display 17, an operation unit 18, and a communication unit 19.

The CPU 11 is an arithmetic element (for example, a processor) that executes arithmetic processing. The CPU 11 performs various processes on the basis of data such as programs stored in the ROM 12 or the nonvolatile memory 14. By executing the programs stored in the ROM 12 or the nonvolatile memory 14, the CPU 11 functions as a control unit capable of executing various operations.

The ROM 12 is a read-only nonvolatile memory. The ROM 12 stores programs and data used in the programs.

The RAM 13 is a volatile memory that functions as a working memory. The RAM 13 temporarily stores data under processing of the CPU 11 and the like. Further, the RAM 13 temporarily stores programs executed by the CPU 11.

The nonvolatile memory 14 is a storage medium capable of storing various information. The nonvolatile memory 14 stores programs and data used by the programs. The nonvolatile memory14 is, for example, a solid state drive (SSD), a hard disk drive (HDD), or other storage device. Note that, instead of the nonvolatile memory 14, a memory I/F such as a card slot into which a storage medium such as a memory card can be inserted may be provided.

The card reader writer 15 is an interface device for communicating with the IC card 3. The card reader writer 15 transmits and receives data to and from the IC card 3 by contact communication or contactless communication.

The biological sensor 16 reads biometric information from the user of the IC card 3. For example, the biological sensor 16 acquires the biometric information on a fingerprint of the user of the IC card 3. Specifically, the biological sensor 16 acquires an image of the fingerprint of the user of the IC card 3, and acquires fingerprint data as the biometric information from the acquired fingerprint image. Note that the biological sensor 16 may be configured to read the biometric information on a face, vein, iris, etc. of the user of the IC card 3. Note that the biometric information read by the biological sensor 16 from the user of the IC card 3 is referred to as read biometric information.

The display 17 displays an image in response to a video signal input from a display control unit (not shown) such as the CPU 11 or a graphic controller.

The operation unit 18 generates an operation signal on the basis of an operation of an operation member. The operation member is, for example, a touch sensor, a numeric keypad, a keyboard, or the like. The touch sensor is, for example, a resistive layer type touch sensor, a capacitance type touch sensor, or the like. That is, the touch sensor acquires information indicating a specified position within a certain region. The touch sensor is integrated with the display 17 to form a touch screen, and the touch sensor inputs a signal indicating a touched position on the display 17 to the CPU 11.

The communication unit 19 is a circuitry for communicating with other electronic devices. The communication unit 19 is configured to be connectable to a network, for example. The communication unit 19 communicates with other electronic devices via the network.

The CPU 11 of the IC card processing device 2 having the above configuration performs an activation process for activating the IC card 3 by supplying electric power to the IC card 3 via the card reader writer 15. As a result, the IC card 3 is ready to execute command processing.

Further, the CPU 11 transmits a select command for selecting the application to the IC card 3 via the card reader writer 15, thereby causing the IC card 3 to execute the application. As a result, the IC card 3 is ready to execute the verification process.

Further, the CPU 11 acquires the read biometric information from the user of the IC card 3 by the biological sensor 16. The CPU 11 generates a verification command including the read biometric information. The CPU 11 transmits a verification command to the IC card 3 via the card reader writer 15, thereby causing the IC card 3 to execute the verification process. The CPU 11 receives a result of the verification process (a verification process result) from the IC card 3.

Further, the CPU 11 can use the verification process result for various processes. For example, the CPU 11 may be configured to determine whether the user is permitted to pass to a specific area on the basis of the verification process result. Furthermore, the CPU 11 may be configured to open and close a door for preventing the user from entering a specific area on the basic of a result of determining whether or not passage is permitted. That is, the IC card processing device 2 may be configured as an entrance and exit management device.

FIG. 2 is an explanatory diagram for explaining an example of a verification command generated by the CPU 11 of the IC card processing device 2. The verification command has fields such as "CLA", "INS", "P1", "P2", "Lc", and "Data". "CLA" and "INS" are information indicating a type of command. "P1" and "P2" are parameters used in a command process according to the command. "Lc" is information indicating a length of "Data". "Data" is a data body of the command.

The CPU 11 sets values corresponding to the verification command to "CLA", "INS", and "Lc". Further, the CPU 11 stores the read biometric information in "Data". Further, the CPU 11 sets values of "P1" and "P2" according to the processing contents of the verification process executed by the IC card 3.

"P1" is used to designate a threshold value in the verification process to be executed in the IC card 3. It should be noted that the CPU 11 may not designate the threshold value in the verification process. For example, the CPU 11 sets "00" to "P1" when not designating a threshold value in the verification process.

"P2" is used to designate a type of the biometric information (a biometric type) used in the verification process and a verification algorithm used in the verification process. The biometric type is information indicating one of a plurality of biometric information such as a fingerprint, a face, a vein, an iris, and the like. The verification algorithm is information indicating one of a plurality of methods executable for each biometric type.

Further, when a plurality of pieces of biometric information exists in one biometric type, "P2" may further include information for designating one of the plurality of pieces of biometric information. For example, fingerprint data and the like are different for each finger. In such a case, "P2" may further include information indicating which finger a finger of a fingerprint is.

Specifically, a first bit b1 to a third bit b3 of "P2" are used for designating the biometric type, a fourth bit b4 to a fifth bit b5 are used for designating the biometric information, and a sixth bit b6 to an eighth bit b8 are used for designating the verification algorithm. Note that, when the biometric type and the verification algorithm to be used in the verification process are determined in advance, the CPU 11 may not designate the biometric type and the verification algorithm in the verification process by "P2".

### (Regarding IC card 3)

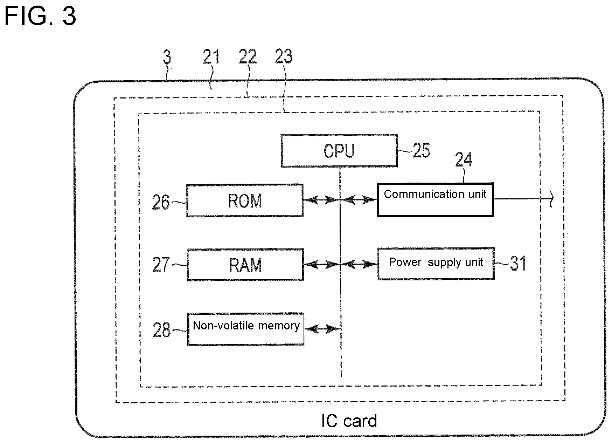

The IC card 3 performs the verification process in response to the verification command from the IC card processing device 2. FIG. 3 is an explanatory diagram for explaining an example of a configuration of the IC card 3.

The IC card 3 includes, for example, a card-like main body 21 and an IC module 22 built in the main body 21. The IC module 22 includes an IC chip 23 and a communication circuitry (not shown) connected to the IC chip 23. The communication circuitry is configured as, for example, an antenna or a contact terminal (a contact pattern). The communication circuitry is electrically or magnetically connected to the card reader writer 15 of the IC card processing device 2.

The IC chip 23 includes a communication unit 24, a CPU 25, an ROM 26, an RAM 27, a nonvolatile memory 28, a power supply unit 31, and the like. The communication unit 24, the CPU 25, the ROM 26, the RAM 27, the nonvolatile memory 28, and the power supply unit 31 are connected to each other via a bus.

The communication unit 24 is a circuitry for communicating with the IC card processing device 2. The communication unit 24 transmits and receives data to and from the IC card processing device 2 through contact communication or contactless communication via the communication circuitry described above. For example, the communication unit 24 performs a signal processing on a signal transmitted from the IC card processing device 2, thereby acquiring data such as a command transmitted by the IC card processing device 2. The communication unit 24 supplies the acquired data to the CPU 25. In addition, the communication unit 24 generates a signal on the basis of data such as a response supplied from the CPU 25, and transmits the generated signal to the IC card processing device 2.

The CPU 25 is an arithmetic element (for example, a processor) that executes arithmetic processing. The CPU 25 performs various processes on the basis of data such as programs stored in the ROM 26 or the nonvolatile memory 28. By executing the programs stored in the ROM 26 or the nonvolatile memory 28, the CPU 25 functions as a control unit capable of executing various operations.

The ROM 26 is a read-only nonvolatile memory. The ROM 26 stores the programs and data used by the programs. The ROM 26 is incorporated in the IC card 3 in a state where the programs, data and the like are stored at the manufacturing stage. The programs and data stored in the ROM 26 are determined by a specification of the IC card 3.

The RAM 27 is a volatile memory functioning as a working memory. The RAM 27 temporarily stores data under processing of the CPU 25 and the like. Further, the RAM 27 temporarily stores data received via the communication unit 24. Further, the RAM 27 temporarily stores data to be transmitted via the communication unit 24. Furthermore, the RAM 27 temporarily stores the programs executed by the CPU 25.

The nonvolatile memory 28 is a storage medium capable of storing various information. The nonvolatile memory 28 stores the programs, data used by the programs, and the like. The nonvolatile memory 28 is composed of, for example, a semiconductor memory or the like. The nonvolatile memory 28 stores, for example, a plurality of pieces of biometric information and a plurality of verification programs corresponding to a plurality of verification algorithms.

The power supply unit 31 supplies electric power to each unit of the IC card 3. The power supply unit 31 converts the electric power supplied from the IC card processing device 2 via the communication circuitry to rated voltage for each unit and supplies the rated voltage to each unit. It should be noted that the power supply unit 31 may be configured to include a battery and supply electric power of the battery to each unit.

### (Regarding issuance of IC card 3)

The IC card 3 is issued by a primary issuance and a secondary issuance. An issuing device for issuing the IC card 3 defines an area for storing data in the nonvolatile memory 28 of the IC card 3 in the primary issuance. The issuing device creates, for example, a file structure prescribed by ISO/IEC 7816 in the nonvolatile memory 28.

In the secondary issuance, the issuing device issues the IC card 3 by writing the data in the area defined by the primary issuance. The data written in the secondary issuance includes information on the user of the IC card 3, for example. Specifically, the issuing device writes the biometric information previously acquired from a humanbeings'biological body of the user of the IC card 3 in the nonvolatile memory 28 of the IC card 3 as the registered biometric information.

The registered biometric information is, for example, information on the fingerprint of the user of the IC card 3. Specifically, the registered biometric information is fingerprint data generated from the image of the fingerprint of the user of the IC card 3. Note that the registered biometric information is not limited to information related to fingerprints. The registered biometric information may be any biometric information acquired from a humanbeings' biological body such as a fingerprint, a face, a vein, an iris, and the like. Furthermore, the registered biometric information may be plural. That is, the registered biometric information may include a plurality of pieces of biometric information related to a fingerprint, a face, a vein, an iris, and the like.

### (Regarding CPU 25)

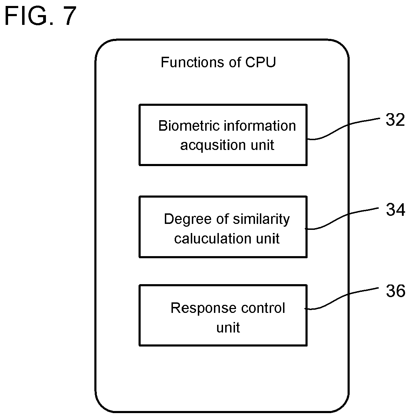

In the IC card 3 having the above configuration, the CPU 25 executes the programs stored in the ROM 26 or the nonvolatile memory 28, thereby functioning as a biometric information acquiring unit 32, a degree of similarity calculation unit 34, and a response control unit 36 as shown in FIG. 7.

For example, the CPU 25 analyzes the verification command transmitted from the IC card processing device 2 and acquires the biometric information (the read biometric information) included in the verification command. In this case, the CPU 25 functions as the biometric information acquiring unit 32. It should be noted that the IC card 3 may be provided with a biological sensor for acquiring biometric information from the humanbeings' biological body. In this case, the biological sensor and the CPU 25 controlling the biological sensor function as the biometric information acquiring unit 32. The biological sensor includes, for example, a camera for photographing a user's fingerprint, face, iris, and the like.

Further, for example, the CPU 25 compares the read biometric information with the registered biometric information stored in the nonvolatile memory 28 and calculates the degree of similarity. In this case, the CPU 25 functions as the degree of similarity calculating unit 34. For example, the CPU 25 calculates a concordance rate between the read biometric information acquired from the verification command and the registered biometric information stored in the nonvolatile memory 28 as the degree of similarity. The verification algorithm for calculating the concordance rate may be, for example, a feature point method, a relation method, or any other known verification algorithm.

Further, for example, when receiving a command from the IC card processing device 2, the CPU 25 recognizes a process corresponding to the command and executes the recognized process (a command process). The CPU 25 transmits a response including a result of the command process (a command process result) to the IC card processing device 2 by the communication unit 24. In this case, the CPU 25 functions as a response control unit 36 responding in response to the command.

With the above configuration, when receiving the verification command from the IC card processing device 2, the CPU 25 executes a verification process. The verification process is a process of calculating the degree of similarity between the read biometric information acquired from the verification command and the registered biometric information and transmitting a response corresponding to the calculated degree of similarity to the IC card processing device 2 as the verification process result. That is, when receiving the verification command from the IC card processing device 2, the CPU 25 calculates the degree of similarity between the read biometric information and the registered biometric information, and transmits the verification process result corresponding to the calculated degree of similarity to the IC card processing device 2.

### (Regarding verification process)

Next, a specific operation when the CPU 25 functions as the degree of similarity calculation unit 34 will be described. When executing the verification process, the CPU 25 first calculates the degree of similarity. When calculating the degree of similarity, the CPU 25 recognizes the biometric type and the verification algorithm used for calculating the degree of similarity on the basis of the received verification command. Further, the CPU 25 acquires the registered biometric information corresponding to the recognized biometric type. Note that, when a plurality of pieces of biometric information (the registered biometric information) is associated with each biometric type, the CPU 25 recognizes and reads one of the plurality of pieces of registered biometric information on the basis of the received verification command.

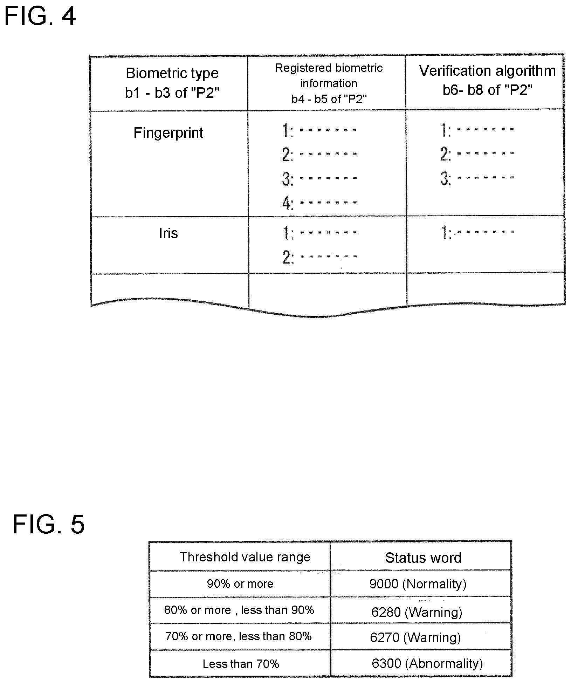

FIG. 4 is an explanatory diagram for explaining the correspondence relationship among the biometric type, the biometric information, and the verification algorithm.

The CPU 25 recognizes the biometric type according to a value of the verification command. Specifically, as shown in FIG. 4, the CPU 25 recognizes the biometric type of the biometric information used for the verification process on the basis of the values of the first bit b1 to the third bit b3.

In addition, the CPU 25 recognizes which registered biometric information among the plurality of pieces of registered biometric information is to be used for the verification process, according to the value of the verification command. Specifically, as shown in FIG. 4, the CPU 25 recognizes the registered biometric information used for the verification process on the basis of the values of the fourth bit b4 to the fifth bit b5. Further, the CPU 25 reads out the recognized registered biometric information.

In addition, the CPU 25 recognizes the verification algorithm according to the value of the verification command. Specifically, as shown in FIG. 4, the CPU 25 recognizes the verification algorithm to be used for the verification process on the basis of the values of the sixth bit b6 to the eighth bit b8.

Next, the CPU 25 calculates the degree of similarity between the acquired read biometric information and the registered biometric information using the recognized verification algorithm. That is, the CPU 25 calculates the concordance rate between the acquired read biometric information and the registered biometric information on the basis of the verification algorithm specified by the verification command.

Next, a specific operation when the CPU 25 functions as the response control unit 36 will be described. The CPU 25 generates a response according to the degree of similarity calculated by the degree of similarity calculating unit 34. For example, the CPU 25 adds information indicating a level of the degree of similarity to the response according to the calculated degree of similarity. The CPU 25 compares at least three threshold value ranges with the calculated degree of similarity, and recognizes in which threshold value range the calculated degree of similarity is included. The CPU 25 adds information indicating the level of the degree of similarity to the response according to the threshold value range in which the calculated degree of similarity is included. That is, the information indicating the level of the degree of similarity indicates a comparison result of at least three threshold value ranges and the degree of similarity, and there are at least three types of information indicating the level of the degree of similarity. Note that the information indicating the level of the degree of similarity may be a value of the calculated degree of similarity.

FIG. 5 is an explanatory diagram for explaining a correspondence relationship between the threshold value range and the information indicating the level of the degree of similarity. The nonvolatile memory 28 of the IC card 3 stores in advance a table as shown in FIG. 5 in which a plurality of threshold value ranges and status words are associated with each other. The status word is information indicating the level of the degree of similarity. For example, the CPU 25 recognizes the threshold value range in which the calculated degree of similarity is included, among the plurality of threshold value ranges in the table. The CPU 25 selects a status word associated with the recognized threshold value range as a status word to be added to the response.

In an example of Fig. 5, the threshold value ranges are "90% or more", "80% or more and less than 90%", "70% or more and less than 80%", and "less than 70%." Information indicating the level of the degree of similarity is associated with each of these threshold value ranges in advance. In this case, the number of threshold value ranges is four.

In the example of FIG. 5, the status word is one of "normality (value: 9000)", "warning (value: 6280)", "warning (value: 6270)", and "abnormality (value 6300)". In this case, there are four types of information indicating the degree of similarity.

The status word "normality (value: 9000)" is associated with the threshold value range "90% or more". That is, the status word "normality (value: 9000)" indicates that the degree of similarity is 90% or more.

The status word "warning (value: 6280)" is associated with the threshold value range "80% or more and less than 90%". That is, the status word "warning (value: 6280)" indicates that the degree of similarity is 80% or more and less than 90%.

The status word "warning (value: 6270)" is associated with the threshold value range "70% or more and less than 80%". That is, the status word "warning (value: 6270)" indicates that the similarity is 70% or more and less than 80%.

The status word "abnormality (value 6300)" is associated with the threshold value range "less than 70%".

That is, the status word "abnormality (value 6300)" indicates that the degree of similarity is less than 70%.

Next, the operation of the IC card 3 when receiving the verification command will be described.

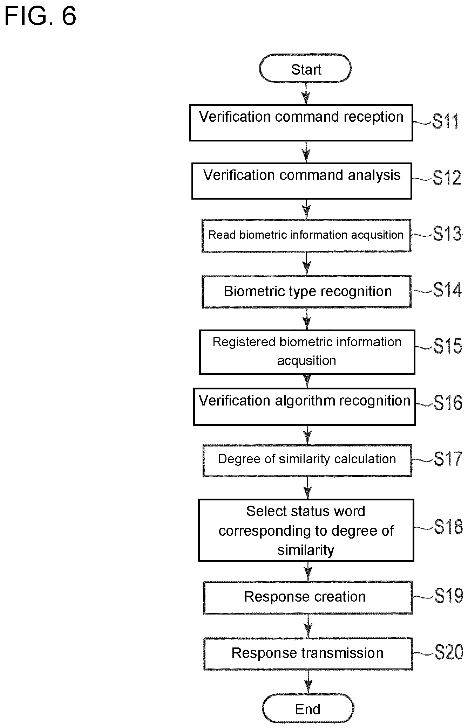

FIG.6 is a flow chart for explaining the operation of the IC card 3.

The CPU 25 of the IC card 3 receives the verification command transmitted from the IC card processing device 2 (step S11).

The CPU 25 analyzes the received verification command (step S 12).

The CPU 25 analyzes the verification command, thereby acquiring the read biometric information stored in the verification command (step S13).

The CPU 25 analyzes the verification command, thereby acquiring the read biometric information stored in the verification command.

Further, the CPU 25 analyzes the verification command, thereby recognizing the biometric type specified by the verification command (step S14).

In addition, the CPU 25 analyzes the verification command, thereby acquiring the biometric information (registered biometric information) specified by the verification command (step S15). That is, the CPU 25 acquires registered biometric information corresponding to the biometric type from the nonvolatile memory 28. Note that when a plurality of pieces of registered biometric information is associated with each biometric type in the nonvolatile memory 28, the CPU 25 acquires the registered biometric information specified by the verification command among the plurality of pieces of registered biometric information from the nonvolatile memory 28.

In addition, the CPU 25 analyzes the verification command, thereby recognizing the verification algorithm specified by the verification command (step S16).

The CPU 25 calculates the degree of similarity between the read biometric information and the registered biometric information by the verification algorithm recognized in step S16 (step S17).

The CPU 25 selects the status word to be added to the response according to the calculated degree of similarity (step S18). That is, the CPU 25 recognizes in which threshold value range of the plurality of threshold value ranges the calculated degree of similarity is included, in the table in which the plurality of threshold value ranges are associated with status words. The CPU 25 selects a status word associated with the recognized threshold value range as a status word to be added to the response. In the example of FIG. 5, for example, when the calculated degree of similarity is 86%, the CPU 25 selects the status word "warning (value: 6280)" as information indicating the degree of similarity.

The CPU 25 generates a response using the selected status word (step S19).

The CPU 25 transmits the generated response to the IC card processing device 2 (step S20).

The IC card 3 configured as described above includes a communication unit 24 that communicates with the IC card processing device 2 as an external device and a nonvolatile memory 28 that stores in advance the registered biometric information as a first biometric information. The CPU 25 of the IC card 3 acquires the read biometric information read from the humanbeings' biological body, as a second biometric information, from the verification command transmitted from the IC card processing device 2, calculates the degree of similarity between the registered biometric information and the read biometric information, and transmits information indicating a level of the degree of similarity to the IC card processing device 2 by the communication unit 24. As a result, the IC card 3 can transmit, to the IC card processing device 2, as a verification process result, the information indicating the level of the degree of similarity, but not information indicating whether or not the degree of similarity between the registered biometric information and the read biometric information is equal to or more than a predetermined threshold value.

With such a configuration, the biometric authentication system 1 can cause the IC card processing device 2 to execute different processing depending on the level of the degree of similarity. Therefore, by using the IC card 3, it is possible to construct a more flexible system. For example, it is possible to set the processing depending on the verification process result to the IC card processing device 2 according to a location where the IC card processing device 2 is installed.

In addition, in the above embodiment, it is described that the CPU 25 of the IC card 3 is configured to add the status word associated with the threshold value range including the calculated degree of similarity to the response, but the CPU 25 is not limited to this configuration. The CPU 25 may be configured to select a status word that is added to the response on the basis of the threshold value specified by the verification command. That is, the information indicating the level of the degree of similarity indicates the comparison result of the threshold value specified from the external device and the degree of similarity. For example, when a threshold value is specified by "P1" of the verification command, the CPU 25 may be configured to add a status word "normality (value: 9000)" to a response when the calculated degree of similarity is equal to or greater than the threshold value specified by "P1", and add a status word "abnormality (value: 6300)" to a response when the calculated degree of similarity is less than the threshold value specified by "P1". For example, by changing the threshold value that is set to "P1" according to the installation location, the IC card processing device 2 can cause the IC card 3 to execute a verification process in which the reading condition is taken into account. By using the IC card 3 and the IC card processing device 2 having such a configuration, it is also possible to construct a flexible system.

While several embodiments of the present invention have been described, these embodiments have been presented by way of example and are not intended to limit the scope of the invention. These novel embodiments can be implemented in various other forms and various omissions, substitutions, and changes can be made without departing from the spirit of the invention. These embodiments and modifications thereof are included in the scope and gist of the invention and are included in the invention described in the claims and the equivalent scope thereof.

## Claims

1. An IC card comprising:
a communication unit which communicates with an external device;
a storage unit which stores first biometric information in advance;
a biometric information acquisition unit which acquires second biometric information read from a humanbeings' biological body;
a degree of similarity calculation unit which calculates a degree of similarity between the first biometric information and the second biometric information; and
a response control unit which transmits information indicating a level of the degree of similarity to the external device by the communication unit.

2. The IC card according to claim 1, wherein
the information indicating the level of the degree of similarity indicates a comparison result of at least three threshold value ranges and the degree of similarity.

3. The IC card according to claim 1, wherein
the information indicating the level of the degree of similarity indicates a comparison result of a threshold value specified from the external device and the degree of similarity.

4. The IC card according to claim 1, wherein
the information indicating the level of the degree of similarity indicates a threshold value range including the degree of similarity out of at least three threshold value ranges.

5. The IC card according to claim 1, wherein
the information indicating the level of the degree of similarity indicates a value of the degree of similarity.

6. The IC card according to any one of claims 1 to 5, wherein
the degree of similarity calculation unit acquires, from the storage unit, the biometric information specified by the external device as the first biometric information used for calculating the degree of similarity.

7. The IC card according to any one of claims 1 to 5, wherein
the degree of similarity calculation unit calculates a degree of similarity between the first biometric information and the second biometric information using a verification algorithm specified by the external device.

8. The IC card according to claim 6, wherein
the storage unit stores in advance a plurality of pieces of biometric information.

9. The IC card according to claim 7, wherein
the storage unit stores in advance a plurality of pieces of biometric information having the same type of biometric information.

10. The IC card according to claim 7, wherein
the storage unit stores a plurality of pieces of biometric information having different types of biometric information and a plurality of verification programs corresponding to a plurality of verification algorithms.

11. The IC card according to claim 7, wherein
the storage unit stores a plurality of pieces of biometric information for each type of biometric information and a plurality of verification programs corresponding to a plurality of verification algorithms.

12. A portable electronic device comprising:
a communication unit which communicates with an external device;
a storage unit which stores first biometric information in advance;
a biometric information acquisition unit which acquires second biometric information read from a humanbeings' biological body; and
a degree of similarity calculation unit which calculates a degree of similarity between the first biometric information and the second biometric information; and
a response control unit which transmits information indicating a level of the degree of similarity to the external device by the communication unit.

13. A control method of an IC card including a communication unit that communicates with an external device, a storage unit that stores a first biometric information in advance, and a processor, wherein the processor performs to
acquire a second biometric information read from a humanbeings' biological body,
calculates degree of similarity between the first biometric information and the second biometric information, and
transmits information indicating a level of the degree of similarity to the external device by the communication unit.
